# EUROPÄISCHE PATENTSCHRIFT

(11) **EP 1 569 783 B1**
(45) Veröffentlichungstag und Bekanntmachung des Hinweises auf die Patenterteilung: **24.05.2006**
(21) Anmeldenummer: 03788835.1
(22) Anmeldetag: 02.12.2003
(51) Int. Cl.: B29C 49/00, B29C 47/12

(54) **VORRICHTUNG ZUR HERSTELLUNG VON QUERRIPPENROHREN**
DEVICE FOR THE PRODUCTION OF TRANSVERSELY RIBBED PIPES
DISPOSITIF POUR PRODUIRE DES TUBES A NERVURES TRANSVERSALES

(30) Priorität: 09.12.2002 DE 10257364
(43) Veröffentlichungstag der Anmeldung: 07.09.2005
(73) Patentinhaber: UNICOR GmbH, 97437 Hassfurt (DE)
(72) Erfinder: HOFMANN, Günther, 97437 Hassfurt (DE); FÖSEL, Stefan, 96151 Breitbrunn (DE)
(74) Vertreter: LOUIS, PÖHLAU, LOHRENTZ
(86) Internationale Anmeldenummer: PCT/DE2003/003963
(87) Internationale Veröffentlichungsnummer: WO 2004/052622

(56) Entgegenhaltungen:
- DE-A- 19 619 429
- US-A- 3 732 046
- US-A- 3 999 925
- PATENT ABSTRACTS OF JAPAN vol. 009, no. 094 (M-374), 24. April 1985 (1985-04-24) & JP 59 220334 A (TAKIRON KK), 11. Dezember 1984 (1984-12-11)

## Beschreibung

Die Erfindung betrifft eine Vorrichtung zur Herstellung von Querrippenrohren, mit Formbackenhälften, die entlang zweier endloser Führungsbahnen aneinander anliegend mittels jeweils einer zugehörigen Antriebseinrichtung umlaufend bewegbar sind, wobei die beiden Führungsbahnen eine gemeinsame Formstrecke, jeweils eine Rücklaufstrecke und jeweils zwei Umlenkstrecken aufweisen, wobei die Formbackenhälften entlang der Formstrecke einen Formkanal für das Querrippenrohr bilden, und die jeweilige Umlenkstrecke ein Umlenkorgan aufweist, das mit einem bogenförmigen Führungsrand ausgebildet ist.

Eine solche Vorrichtung zur Herstellung von Querrippenrohren mit Formbackenhälften, die entlang zweier endloser Führungsbahnen aneinander anliegend mittels jeweils einer zugehörigen Antriebseinrichtung umlaufend bewegbar sind, ist beispielsweise aus der DE 197 02 647 Cl bekannt.

Bei bekannten gattungsgemäßen Vorrichtungen weisen die Umlenkorgane einen kreisbogenförmigen Führungsrand auf, so daß an der Übergangsstelle zwischen dem geraden Abschnitt der jeweiligen Führungsbahn an der Form- und Rücklaufstrecke und dem kreisbogenförmigen Führungsrand des jeweiligen Umlenkorganes eine Sprungbewegung der Formbackenhälften nicht vermeidbar ist. Diese resultiert aus den unterschiedlichen Fliehkräften der Formbackenhälften an deren radialem Innenrand und an deren radialem Außenabschnitt entlang des jeweiligen Umlenkorganes. Diese Springbewegung resultiert in einer entsprechenden Geräuschentwicklung. Von noch größerem Mangel ist jedoch, daß durch diese Springbewegung der Formbackenhälften die Vorschubgeschwindigkeit der Formbackenhälften entlang den beiden Führungsbahnen beschränkt ist. Das bedeutet eine entsprechende Beschränkung der Produktivität bekannter gattungsgemäßer Vorrichtungen. Ein weiterer nicht zu vernachlässigender Mangel solcher bekannter Vorrichtungen zur Herstellung von Querrippenrohren besteht darin, daß während des Anfahrens der Vorrichtung und während des nachfolgenden Betriebes derselben unterschiedliche Temperaturverhältnisse herrschen, d.h. während des Betriebes weisen die Formbackenhälften eine erhöhte Betriebstemperatur auf. Diese erhöhte Betriebstemperatur resultiert in einer entsprechenden Wärmedehnung der Formbackenhälften, so daß es erforderlich ist, die beiden Führungsbahnen an die Wärmedehnung angepaßt zu verlängern. Zu diesem Zwecke werden bislang die Umlenkorgane manuell eingestellt. Diese Einstellung bedingt ein gut geschultes Personal.

Eine Vorrichtung der eingangs genannten Art, die den Oberbegriff des Anspruchs 1 entspricht, ist beispielsweise aus der DE 196 19 429 A1 bekannt. Bei dieser bekannten Vorrichtung sind die entlang der jeweiligen Führungsbahn umlaufenden Formbackenhälften miteinander mittels Führungselementen verbunden, die von Zugfedern gebildet sind. Die Umlenkorgane sind im Einlaufbereich in die Formstrecke mit einem nicht kreisförmigen sondern mit einem annähernd elliptischen Führungsrand ausgebildet, um eine überschneidende Berührung der Formbackenhälften an ihren Kanten zu vermeiden.

Aus der DE 42 24 514 A1 ist ebenfalls eine Vorrichtung der eingangs genannten Art bekannt, bei der die Formbackenhälften an Ketten angeordnet sind, mittels welchen die Formbackenhälften miteinander verbunden sind. Die Ketten sind um Umlenkräder umgelenkt. Dort sind die Umlenkorgane also von den Umlenkrädern gebildet, die einen kreisrunden Umfangsrand besitzen.

Die US 4 824 354 offenbart eine hydraulische Presse mit ersten und zweiten Formbacken, die an Riemen angebracht sind, die entlang zweier endloser Führungsbahnen mittels einer zugehörigen Antriebseinrichtung umlaufend bewegbar sind. Die beiden Führungsbahnen bilden eine gemeinsame Formstrecke. Die Umlenkstrecken der beiden endlosen Führungsbahnen weisen jeweils ein Umlenkorgan auf, das von einer Rolle mit einem kreisrunden Umfang gebildet ist. Die Umlenkrollen sind an einem maschinenfesten Gestell federnd beweglich angebracht, um die Riemen zu spannen.

Der Erfindung liegt die Aufgabe zugrunde, eine Vorrichtung der eingangs genannten Art zu schaffen, bei welcher eine Springbewegung der Formbackenhälften am kritischen Übergangsbereich zwischen dem jeweiligen geradlinigen Verlauf der beiden Führungsbahnen und der jeweils daran anschließenden Umlenkstrecke vermieden wird.

Diese Aufgabe wird mit einer Vorrichtung nach dem gekennzeichnenden Teil des Anspruch 1 gelöst.

Bei der Klothoide (-Spinnlinie) handelt es sich um eine Kurve mit einem Nullpunkt mit der Eigenschaft, daß der Kehrwert des Krümmungsradius in jedem Punkt der Kurve zur Länge des Kurvenbogens zwischen dem Nullpunkt und dem Kurvenpunkt proportional ist. Das heißt, die Krümmung ist im jeweiligen Kurvenpunkt proportional zur Länge des entsprechenden Kurvenbogens zwischen dem Nullpunkt und dem Kurvenpunkt. Solche Klothoiden-Kurven kommen bislang bei der Planung von Straßenverkehrsanlagen zur Anwendung. Dabei sind als Elenientfolgen beispielsweise eine Gerade-Klothoide-Kreisbogen oder eine Gerade-Klothoide-Kreisbogen-Klothoide-Gerade gebräuchlich.

Dadurch, daß erfindungsgemäß das jeweilige Umlenkorgan eirien klothoidenartigen Führungsrand aufweist, wird eine unerwünschte Springbewegung im Übergang zwischen dem jeweiligen geraden Abschnitt der entsprechenden Führungsbahn und der zugehörigen Umlenkstrecke vermieden bzw. in die Umlenkstrecke hinein verschoben, so daß es möglich ist, die Vorschubgeschwindigkeit der Formbackenhälften zu erhöhen und auf diese Weise die Produktivität der Vorrichtung zu verbessern.

Erfindungsgemäß weist der Führungsrand des jeweiligen Umlenkorganes zwei Klothoidenabschnitte und einen diese verbindenden Kreisbogenabschnitt auf. Als zweckmäßig hat es sich erwiesen, wenn bei einer solchen Ausbildung an den jeweiligen Klothoidenabschnitt auf der vom Kreisbogenabschnitt abgewandten Seite ein gerader Abschnitt anschließt.

Erfindungsgemäß können die beiden Klothoidenabschnitte des Umlenkorgan-Führungsrandes unterschiedlich lang sein. Bei einer solchen Ausbildung der zuletzt genannten Art können die beiden geraden Abschnitte des Umlenkorgan-Führungsrandes ebenfalls unterschiedlich lang sein.

Erfindungsgemäß ist es auch möglich, daß die beiden Klothoidenabschnitte des Umlenkorgan-Führungsrandes mindestens annähernd gleich lang sind. Bei einer derartigen Ausbildung können die beiden geraden Abschnitte des Umlenkorgan-Führungsrandes ebenfalls mindestens annähernd gleichlang sein.

Um eine mechanische Justierung der Umlenkorgane in Abhängigkeit von der Betriebstemperatur der Formbackenhälften zu vermeiden, ist es bevorzugt, wenn das jeweilige Umlenkorgan mit einer das von der Temperatur und/oder von der Geschwindigkeit der Formbackenhälften abhängende Toleranzspiel der entlang der zugehörigen Führungsbahn umlaufenden Formbacken ausgleichenden Kompensationseinrichtung verbunden ist. Diese Kompensationseinrichtung weist zweckmäßigerweise eine mit Druckluft beaufschlagbare Luftfeder auf. Eine solche Luftfeder ist beispielsweise aus dem Prospekt der Fa. Festo "Fluidic Muscle Typ MAS-... 0010NH" bekannt.

Die mit der erfindungsgemäßen Vorrichtung erzielten Vorteile bestehen darin, daß eine unerwünschte Springbewegung der Formbackenhälften entlang der jeweiligen Führungsbahn verhindert bzw. zumindest reduziert ist, so daß die Vorschubgeschwindigkeiten der Formbackenhälften entlang den beiden Führungsbahnen entsprechend erhöht werden können, woraus eine verbesserte Produktivität der Vorrichtung resultiert, bzw. daß bei einer bevorzugten Ausbildung eine automatische Kompensation von temperatur- und/oder geschwindigkeitsabhängigen Längenänderungen der beiden Führungsbahnen erfolgt, so daß manuelle Verstellungen nicht notwendig sind.

Weitere Einzelheiten, Merkmale und Vorteile ergeben sich aus der nachfolgenden Beschreibung eines in der Zeichnung dargestellten Ausführungsbeispieles der erfindungsgemäßen Vorrichtung bzw. wesentlicher Einzelheiten derselben.

### Es zeigen:

- Figur 1: eine Ansicht der Vorrichtung in Blickrichtung von oben,
- Figur 2: ein wesentliches Detail der Vorrichtung gemäß Figur 1, und
- Figur 3: eine perspektivische Darstellung des Details gemäß Figur 2 in einer Ansicht von unten, wobei eine Formbackenhälfte und die Kompensationseinrichtung nur abschnittweise dargestellt sind.

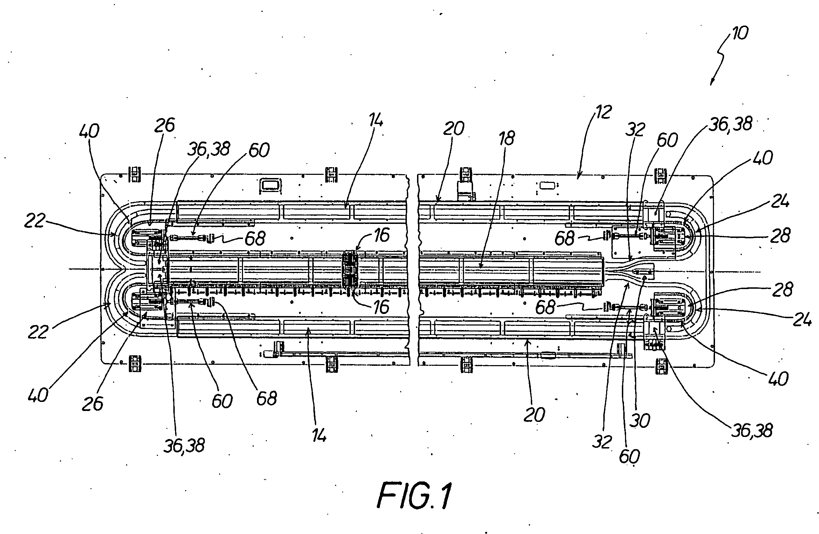

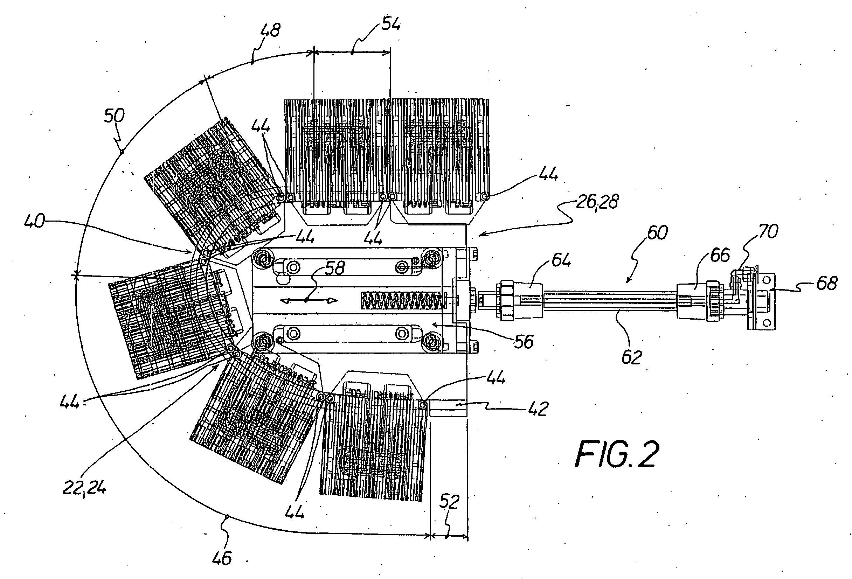

Figur 1 zeigt in einer Ansicht von oben abgeschnitten eine Ausbildung der Vorrichtung 10 zur Herstellung von Querrippenrohren. Die Vorrichtung 10 weist eine Basiseinrichtung 12 mit zwei Führungsbahnen 14 für Formbackenhälften 16 auf, von welchen in Figur 2 nur zwei Formbackenhälften 16 dargestellt sind. Die Formbackenhälften 16 liegen entlang den beiden Führungsbahnen 14 aneinander an. Das ist in Figur 2 verdeutlicht, in der eine Anzahl Formbackenhälften 16 aneinander anliegend dargestellt sind.

Die beiden Führungsbahnen 14 weisen eine gemeinsame Formstrecke 18 und jeweils eine Rücklaufstrecke 20 auf. Die beiden Rücklaufstrecken 20 sind mit der gemeinsamen Formstrecke 18 jeweils durch zwei Umlenkstrecken 22 und 24 verbunden. Entlang der gemeinsamen Formstrecke 18 bilden die FormbackenhälRen 16 in an sich bekannter Weise einen Formkanal für das mit der Vorrichtung 10 herzustellende Querrippenrohr.

Die Umlenkstrecken 22 weisen jeweils ein Umlenkorgan 26 und die Umlenkstrecken 24 weisen jeweils ein Umlenkorgan 28 auf. Die Umlenkorgane 28 weisen eine kleinere Querabmessung auf als die Umlenkorgane 26, weil am Ausgang der gemeinsamen Formstrecke 18 ein Keilelement 30 vorgesehen ist und die beiden Umlenkstrecken 24 einen sich erweiternden Abschnitt 32 aufweisen, damit das in der Formstrecke 18 hergestellte Querrippenrohr problemlos von den Formbackenhälften 16 trennbar ist.

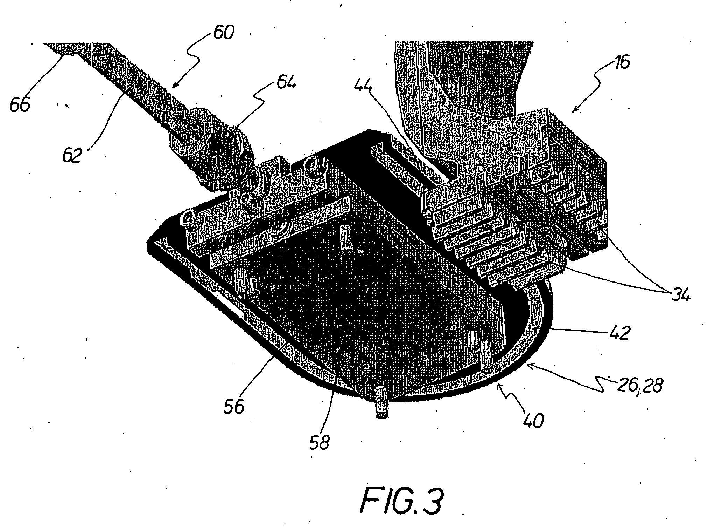

Die Formbackenhälften 16 der jeweiligen Führungsbahn 14 werden mit Hilfe einer Antriebseinrichtung entlang den Führungsbahnen 14 bewegt. Zu diesem Zwecke sind die Formbackenhälften 16 mit einer Zahnung 34 ausgebildet (sh. Figur 3) und sind in die Führungsbahnen 14 Zahnräder 36 (sh. Figur 1) integriert, die mit der Zahnung 34 der entsprechenden Formbackenhälften 16 kämmend in Eingriff sind. Die Zahnungen 34 der jeweils in einer endlosen Kette vorgesehenen, aneinander anliegenden Formbackenhälften 16 bilden folglich quasi endlose Zahnstangen. Die Zahnräder 36 bilden für die zugehörigen Formbackenhälften 16 eine Antriebseinrichtung 38.

Wie aus Figur 2 ersichtlich ist, weist das jeweilige Umlenkorgan 26 bzw. 28 einen klothoidenartig bogenförmigen Führungsrand 40 auf. Der Führungsrand 40 ist durch eine Führungsrinne 42 bestimmt, entlang der Führungsrollen 44 spielfrei geführt sind, die an den Formbackenhälften 16 paarweise vorgesehen sind. Die Führungsrinne 42 ist auch aus Figur 3 ersichtlich. Die Figur 3 verdeutlicht desweiteren eine der beiden Führungsrollen 44 der zugehörigen Formbackenhälfte 16.

Der von der Führungsrinne 42 gebildete klothoidenartige Führungsrand 40 weist zwei Klothoidenabschnitte 46 und 48 und einen diese verbindenden Kreisbogenabschnitt 50 auf (sh. Figur 2): Die beiden Klothoidenabschnitte 46 und 48 sind unterschiedlich lang. An den Klothoidenabschnitt 46 und an den Klothoidenabschnitt 48 schließt auf der vom Kreisbogenabschnitt 50 abgewandten Seite jeweils ein gerader Abschnitt 52 bzw. 54 an.

Während bei den beiden Umlenkorganen 26 auf der Eingangsseite der gemeinsamen Formstrecke 18 die beiden Klothoidenabschnitte 46 und 48 und die geraden Abschnitte 62 und 54 unterschiedlich lang sind, sind bei den Umlenkorganen 28 auf der Ausgangsseite der gemeinsamen Formstrecke 18 die Klothoidenabschnitte 46 und 48 und die geraden Abschnitte 52 und 54 jeweils mindestens annähernd gleich lang (sh. Fig.1).

Das jeweilige Umlenkorgan 26 bzw. 28 ist an einem maschinenfesten Basiselement 56 (sh. insbesondere Figur 3) linear beweglich vorgesehen. Diese lineare Beweglichkeit ist in Figur 3 durch den Doppelpfeil 58 verdeutlicht. Das jeweilige Umlenkorgan 26 bzw. 28 ist mit einer Kompensationseinrichtung 60 verbunden, die dazu vorgesehen ist, das von der Temperatur und/oder von der Geschwindigkeit der Formbackenhälften 16 abhängende Toleranzspiel der Formbackenhälften 16 entlang der zugehörigen Führungsbahn 14 automatisch auszugleichen. Die Kompensationseinrichtung 60 weist eine Luftfeder 62 auf, die an ihren beiden voneinander entfernten Enden jeweils eine Anschlußarmatur 64, 66 aufweist. Die Anschlußarmatur 64 ist mit dem zugehörigen Umlenkorgan 26 bzw. 28 verbunden. Die Anschlußarmatur 66 ist an eine maschinenfeste Konsole 68 angeschlossen und weist einen Druckluftanschluß 70 auf. Die Luftfeder 62 wird mit Druckluft beaufschlagt, so daß sich eine Verkürzung der Luftfeder 62 zwischen Ihren Anschlußarmaturen 64 und 66 ergibt.

## Patentansprüche

1. Vorrichtung zur Herstellung von Querrippenrohren, mit Formbackenhälften (16), die entlang zweier endloser Führungsbahnen (14) aneinander anliegend mittels jeweils einer zugehörigen Antriebseinrichtung (38) umlaufend bewegbar sind, wobei die beiden Führungsbahnen (14) eine gemeinsame Formstrecke (18), jeweils eine Rücklaufstrecke (20) und jeweils zwei Umlenkstrecken (22, 24) aufweisen, wobei die Formbackenhälften (16) entlang der Formstrecke (18) einen Formkanal für das Querrippenrohr bilden, und die jeweilige Umlenkstrecke (22, 24) ein Umlenkorgan (26, 28) aufweist, das mit einem bogenförmigen Führungsrand (40) ausgebildet,
**dadurch gekennzeichnet,**
**daß** der Führungsrand (40) des jeweiligen Umlenkorganes (26, 28) zwei Klothoidenabschnitte (46, 48) und einen diese verbindenden Kreisbogenabschnitt (50) aufweist.

2. Vorrichtung nach Anspruch 1,
**dadurch gekennzeichnet,**
**daß** an den jeweiligen Klothoidenabschnitt (46, 48) auf der vom Kreisbogenabschnitt (50) abgewandten Seite ein gerader Abschnitt (52, 54) anschließt.

3. Vorrichtung nach Anspruch 1 oder 2,
**dadurch gekennzeichnet,**
**daß** die beiden Klothoidenabschnitte (46, 48) des Umlenkorgan-Führungsrandes (40) unterschiedlich lang sind.

4. Vorrichtung nach Anspruch 2 oder 3,
**dadurch gekennzeichnet,**
**daß** die beiden geraden Abschnitte (52, 54) des Umlenkorgan-Führungsrandes (40) unterschiedlich lang sind.

5. Vorrichtung nach Anspruch 1,
**dadurch gekennzeichnet ,**
**daß** die beiden Klothoidenabschnitte (46, 48) des Umlenkorgan-Führungsrandes (40) mindestens annähernd gleich lang sind.

6. Vorrichtung nach Anspruch 2 oder 5,
**dadurch gekennzeichnet,**
**daß** die beiden geraden Abschnitte (52, 54) des Umlenkorgan-Führungsrandes (40) mindestens annähernd gleich lang sind.

7. Vorrichtung nach einem der Ansprüche 1 bis 6,
**dadurch gekennzeichnet ,**
**daß** das jeweilige Umlenkorgan (26, 28) mit einer ein von der Temperatur und/oder von der Geschwindigkeit der Formbackenhälften (16) abhängendes Toleranzspiel der entlang der zugehörigen Führungsbahn (14) umlaufenden Formbackenhälften (16) ausgleichenden Kompensationseinrichtung (60) verbunden ist.

8. Vorrichtung nach Anspruch 7,
**dadurch gekennzeichnet,**
**daß** die Kompensationseinrichtung (60) eine mit Druckluft beaufschlagbare Luftfeder (62) aufweist.

## Claims

1. Device for the manufacture of transverse rib pipes, with shaping chuck halves (16), which can be moved circumferentially along two endless guide paths (14) in contact with one another, by means of a drive device (38) belonging to each of them, whereby the two guide paths (14) exhibit a common shaping stretch (18), and in each case a return stretch (20) and in each case two deflecting stretches (22, 24), whereby the shaping chuck halves (16) form along the shaping stretch (18) a shaping channel for the transverse rib pipe, and the individual deflection stretch (22, 24) exhibits a deflection element (26, 28) with a curved guide edge (40), **characterised in that** the guide edge (40) of the individual deflection element (26, 28) exhibits two clothoid sections (46, 48) and an arc-shaped section (50) connecting them.

2. Device according to Claim 1, **characterised in that** at the individual clothoid sections (46, 48), a straight section (52, 54) connects to the side facing away from the arc-shaped section (50).

3. Device according to Claim 1 or 2, **characterised in that** the two clothoid sections (46, 48) of the deflection element guide edge (40) are of different lengths.

4. Device according to Claim 2 or 3, **characterised in that** the two straight sections (52, 54) of the deflection element guide edge (40) are of different lengths.

5. Device according to Claim 1, **characterised in that** the two clothoid sections (46, 48) of the deflection element guide edge (40) are at least approximately of the same length.

6. Device according to Claim 2 or 5, **characterised in that** the two straight sections (52, 54) of the deflection element guide edge (40) are at least approximately of the same length.

7. Device according to any one of Claims 1 to 6, **characterised in that** the individual deflection element (26, 28) is connected to a compensation device (60) which compensates for the tolerance play, dependent on the temperature and/or the speed of the shaping chuck halves (16), of the shaping chuck halves (16) running around the guide path (14) pertaining to them.

8. Device according to Claim 7, **characterised in that** the compensation device (60) exhibits an air spring (62) subjected to compressed air.

## Revendications

1. Dispositif de réalisation de tubes à nervures transversales comportant des demi-empreintes de moulage (16) adjacentes le long de deux voies de guidage (14) continues, autour desquelles chacune desdites demi-empreintes peut se déplacer au moyen d'un dispositif d'entraînement (38) correspondant, les deux voies de guidage (14) comportant un tronçon de moulage (18) commun, respectivement un tronçon de retour (20) et respectivement deux tronçons de renvoi (22, 24), les demi-empreintes de moulage (16) formant le long du tronçon de moulage (18) un canal de moulage pour le tube à nervures transversales et chacun des tronçons de renvoi (22, 24) comportant un organe de renvoi (26, 28) qui est réalisé avec un bord de guidage (40) en forme d'arc de cercle,
**caractérisé en ce que** le bord de guidage (40) de chaque organe de renvoi (26, 28) comporte deux tronçons de clothoïde (46, 48) et un tronçon en arc de cercle (50) formant la liaison entre ces derniers.

2. Dispositif selon la revendication 1, **caractérisé en ce qu'**un tronçon rectiligne (52, 54) est relié à chacun des tronçons de clothoïde (46, 48) du côté opposé au tronçon en arc de cercle (50).

3. Dispositif selon la revendication 1 ou 2, **caractérisé en ce que** les deux tronçons de clothoïde (46, 48) du bord de guidage (40) de l'organe de renvoi sont de longueur différente.

4. Dispositif selon la revendication 2 ou 3, **caractérisé en ce que** les deux tronçons rectilignes (52, 54) du bord de guidage (40) de l'organe de renvoi sont de longueur différente.

5. Dispositif selon la revendication 1, **caractérisé en ce que** les deux tronçons de clothoïde (46, 48) du bord de guidage (40) de l'organe de renvoi sont au moins de longueur à peu près égale.

6. Dispositif selon la revendication 2 ou 5, **caractérisé en ce que** les deux tronçons rectilignes (52, 54) du bord de guidage (40) de l'organe de renvoi sont au moins de longueur à peu près égale.

7. Dispositif selon l'une quelconque des revendications 1 à 6, **caractérisé en ce que** chaque organe de renvoi (26, 28) est relié à un dispositif de compensation (60) qui équilibre le jeu de tolérances des demi-empreintes de moulage (16) se déplaçant le long des voies de guidage (14) correspondantes, lequel jeu de tolérances dépend de la température et/ou de la vitesse des demi-empreintes de moulage (16).

8. Dispositif selon la revendication 7, **caractérisé en ce que** le dispositif de compensation (60) comporte un amortisseur pneumatique (62) actionné à l'air comprimé.
